(19) Europäisches Patentamt
European Patent Office
Office européen des brevets

(11) **EP 1 644 844 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(51) Int Cl.:
*G06F 17/00* $^{(2006.01)}$     *G01N 25/48* $^{(2006.01)}$

(21) Anmeldenummer: **04766116.0**

(22) Anmeldetag: **02.07.2004**

(86) Internationale Anmeldenummer:
**PCT/EP2004/051335**

(87) Internationale Veröffentlichungsnummer:
**WO 2005/003992 (13.01.2005 Gazette 2005/02)**

(54) **VERFAHREN UND VORRICHTUNG ZUR THERMOANALYTISCHEN STOFFUNTERSUCHUNG**

METHOD AND DEVICE FOR A THERMOANALYTICAL MATERIAL ANALYSIS

PROCEDE ET DISPOSITIF D'ANALYSE DE MATIERE THERMOANALYTIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **04.07.2003 EP 03102015**

(43) Veröffentlichungstag der Anmeldung:
**12.04.2006 Patentblatt 2006/15**

(73) Patentinhaber: **Mettler-Toledo GmbH**
**8606 Greifensee (CH)**

(72) Erfinder:
- **HÜTTER, Thomas**
  **CH-5443 Niederrohrdorf (CH)**
- **HEITZ, Christoph**
  **CH-8353 Elgg (CH)**
- **SCHAWE, Jürgen**
  **CH-8363 Bichelsee (CH)**

(74) Vertreter: **Leinweber & Zimmermann**
**European Patent Attorneys**
**Patentanwälte**
**Rosental 7**
**80331 München (DE)**

(56) Entgegenhaltungen:
**EP-A- 0 559 362    US-A- 4 842 417**
**US-A- 5 148 365    US-A- 5 453 940**
**US-A- 6 092 017**

- **PATENT ABSTRACTS OF JAPAN Bd. 1998, Nr. 10, 31. August 1998 (1998-08-31) & JP 10 123034 A (NKK CORP), 15. Mai 1998 (1998-05-15)**

**Beschreibung**

Die Erfindung bezieht sich auf ein. Verfahren zur thermoanalytischen Stoffuntersuchung gemäss dem Oberbegriff des Patentanspruchs 1, sowie auf eine Vorrichtung zur Durchführung dieses Verfahrens gemäss dem Oberbegriff des Patentanspruchs 29.

Die Auswertung der mit derartigen Verfahren herbeigeführten Antwort eines Stoffes auf die auf den Stoff einwirkende Anregung erlaubt die Bestimmung von Stoffeigenschaften und Stoffparametern in dem von der Zeitreihe der Messwerte erfassten Analyseintervall. Bei dem der Anregung ausgesetzten Stoff kann es sich sowohl um einen Reinstoff als auch um ein System oder Gemisch von Stoffen oder Materalien handeln. Ein weithin bekanntes Beispiel für ein solches Verfahren ist die dynamische Thermoanalyse, bei der die Anregung durch ein vorgegebenes zeitliches Temperaturprogramm erfolgt, welchem der Stoff ausgesetzt und als Antwort der von der Probe hervorgerufene Wärmestrom erfasst wird. Häufig wird dieses Verfahren als Differenzmethode ausgeführt, bei welcher der Stoff und ein bekannter Referenzstoff gemäss dem Temperaturprogramm angeregt und als Antwort die Differenz zwischen den von dem Stoff und dem Referenzstoff hervorgerufenen Wärmeströmen herangezogen wird. Ein anderes bekanntes Beispiel ist die thermomechanische Analyse, bei der als Antwort eine Längenänderung eines aus dem Stoff gebildeten Probekörpers in Abhängigkeit von einem vorgegebenen Temperaturprogramm beobachtet wird.

Ein derartiges bekanntes Verfahren (US-A-4 842 417) befaßt sich mit der Auswertung eines Wärmestroms, dessen Quelle ein Aluminiumschmelzbad und dessen Senke eine in das Aluminiumschmelzbad eingetauchte Kaltfingeranordnung ist. Dem Transport dieses Wärmestroms dient ein die Kaltfingeranordnung durchfließender Luftstrom, der sich in der Kaltfingeranordnung durch Wärmeaustausch mit dem Schmelzbad auf eine Temperatur aufheizt, die gemessen wird. Ferner wird der Temperaturunterschied zwischen der in die Kaltfingeranordnung einströmenden und der aus der Kaltfingeranordnung ausströmenden Luft gemessen, um dadurch die Wärmemenge zu erfassen, die der Luftstrom bei seinem Durchfluß durch die Kaltfingeranordnung aufnimmt Der durch diesen Luftstrom transportierte Wärmestrom wird dadurch dynamisch verändert, daß der in die Kaltfingeranordnung einströmende Luftstrom eine intermittierend betriebene Heizanordnung durchläuft. Für den Zusammenhang zwischen der gemessenen Temperatur und der gemessenen Temperaturdifferenz wird ein Modell mit sechs Parametern angenommen, die mit Hilfe des Modells aus einer ausreichenden Zeitreihe der Meßwerte bestimmt werden.

Dem verwendeten Modellansatz liegt die physikalische Annahme zugrunde, daß sich zwischen der in dem Aluminiumschmelzbad befindlichen Kryolithschmelze, die in der Aluminumreduktionszelle auf einer bestimmten Innentemperatur gehalten wird, und der Kaltfingeranordnung eine Grenzschicht aus erstarrtem Kryolith ausbildet, durch die der von dem Temperaturgefälle zwischen der Innentemperatur und der in der Kaltfingeranordnung herrschenden Temperatur hervorgerufene Wärmestrom hindurchfließt. Zur näherungsweisen Beschreibung dieses Temperaturgefälles wird die Erstarrungsschicht in zwei Teilschichten aufgeteilt. Für das thermische Gleichgewicht zwischen der Kaltfingeranordnung und der jeweiligen mittleren Temperatur dieser Teilschichten werden Gleichgewichtsgleichungen aufgestellt, in die als physikalische Parameter der Wärmeübertragungskoeffizient der Kryolithschmelze, der Wärmeübertragungskoeffizient zwischen der Wand der Kaltfingeranordnung und der die Kaltfingeranordnung durchströmenden Luft, die Dicke der erstarrten Kryolithschicht, die Wärmeleitfähigkeit der erstarrten Kryolithschicht und eine von der Flußrate der Luft, ihrer Wärmekapazität und der effektiven Kapazität der Kaltfingeranordnung abhängige Wärme-Raum-Geschwindigkeit eingehen. Ein dieser konkreten physikalischen Modellvorstellung nicht entsprechender Stoff, insbesondere ein unbekannter Stoff, kann mit diesem Modell nicht untersucht werden.

Weiterhin ist es bekannt (US-A-5 453 940), ein dynamisches System als Kurve in einem vieldimensionalen Phasenraum darzustellen. Aus Meßwerten dieser Kurve wird ein mathematisches Modell ermittelt, das dazu verwendet wird, die gemessene Kurve zu künftigen Zeiten hin zu extrapolieren.

JP-A-10 123 034 betrifft das Verhalten metallischer Werkstückproben unter mechanischer Lasteinwirkung bis zum Bruch. Dabei werden gleichzeitig der zeitliche Verlauf der von einem keilförmigen Laststempel ausgeübten Belastung, die dadurch hervorgerufene Deformation der Werkstückprobe und deren Temperaturverlauf aufgezeichnet Eine Modulierung dieser Verläufe ist nicht vorgesehen.

Bei einem bekannten Differenzthermoanalyseverfahren (EP 0 559 362 A1) besteht das die Anregung bildende Temperaturprogramm aus der einzigen Anregungsgrösse in Form einer linear ansteigenden Rampe, der eine periodische Temperaturmodulation vorgegebener Frequenz und vorgegebener Amplitude überlagert ist. Die Auswertung der als Antwort erhaltenen modulierten Wärmestromdifferenz als einziger Antwortgrösse beruht auf einer Aufspaltung des diese Wärmestromdifferenz darstellenden gemessenen Antwortsignals in zwei Signalkomponenten. Die eine Signalkomponente wird durch Mittelwertbildung über jeweils eine oder mehrere Modulationsperioden gewonnen, stellt also eine in dem Antwortsignal enthaltene.Gleichkomponente dar. Bei der anderen Signalkomponente handelt es sich um die in dem Antwortsignal enthaltene Wechselkomponente, die mit der vorgegebenen Modulationsfrequenz oszilliert und durch Differenzbildung zwischen dem gemessenen Antwortsignal und seiner Gleichkomponente ermittelt wird. Diese Art der Anregung und Auswertung des Antwortsignals beruht auf der Anwendung einer einzigen fest vorgegebenen Modulationsfrequenz, wodurch selektiv nur solche Ereignisse angeregt werden, die zu derselben Frequenz oder deren Oberwellen gehören.

Diese Beschränkung auf eine einzige Anregungsfrequenz vermeidet ein anderes bekanntes Thermoanalyseverfahren (EP-A-1 091 208), das eine stochastische Anregung vorsieht und das Signal der Antwortgrösse bei dessen Auswertung einer Korrelationsanalyse unterzieht. Allerdings steigt bei der Korrelationsanalyse, wenn eine hohe Genauigkeit gefordert wird, die notwendige Messzeit an.

Der Erfindung liegt die Aufgabe zugrunde, ein Verfahren der eingangs genannten Art zu schaffen, das für weitgehend beliebige

Anregungen eine wirkungsvolle Auswertung der Antwort ermöglicht, sowie eine Vorrichtung zur Durchführung dieses Verfahrens anzugeben.

Erfindungsgemäß wird diese Aufgabe hinsichtlich des Verfahrens durch die kennzeichnenden Merkmale des Patentanspruchs 1 gelöst.

Bei dieser erfindungsgemäßen Lösung wird nach der Bestimmung der Parameter der Zusammenhang zwischen der Anregung und der Antwort durch das mathematische Modell vollständig abgebildet. Dadurch können Antworten des Stoffs auf beliebige Anregungen auch ohne den Stoff selber anzuregen, ermittelt werden. Die Auswertung der Antworten des Modells allein kann zur Berechnung von charakteristischen Eigenschaften des Stoffs verwendet werden. Sofern die Anregung in einer zur Durchführung des Verfahrens bestimmten Vorrichtung in Abwesenheit des zu untersuchenden Stoffs beaufschlagt wird, können aus dem Modell anstelle der charakteristischen Größen des Stoffs die charakteristischen Größen dieser Vorrichtung bestimmt werden. Sowohl die Anregung als auch die Antwort können dabei aus mehr als einer Größe bestehen. Der Einfachheit halber wird das Prinzip der Erfindung vorwiegend am Fall des Eingrößensystems erläutert.

Wenigstens ein Anteil des Modells wird als zeitinvariant und linear angesetzt. Dies berücksichtigt den Umstand, daß in vielen Fällen der Zusammenhang zwischen der Anregung und der Antwort zumindest näherungsweise linear und zeitinvariant ist. In einem solchen linearen, zeitinvarianten

Modell lässt sich der Zusammenhang zwischen dem der Anregung entsprechenden Eingangssignal und dem der Antwort entsprechenden Ausgangssignal bekanntlich mittels der Impulsantwortfunktion h(t) beschreiben. Wenn die Parameter des Modells bestimmt sind, lässt sich daher beispielsweise die Impulsantwortfunktion direkt ermitteln. Die Impulsantwortfunktion h(t) ist bekanntlich das Antwortsignal für den Fall, dass das Anregungssignal die. Form einer diracschen Deltafunktion aufweist, die im kontinuierlichen Fall definiert ist durch

$$\delta(t) = \begin{cases} \infty & t = 0 \\ 0 & t \neq 0 \end{cases}$$

$$\int_{-\infty}^{\infty} \delta(t)dt = 1 \tag{1}$$

und im zeitdiskreten Fall durch

$$\delta(t) = \begin{cases} 1, & t = 0 \\ 0, & t = \pm 1, \pm 2, \dots \end{cases} \tag{2}$$

Im zeitkontinuierlichen Fall gilt für ein lineares, zeitinvariantes System der Zusammenhang

$$y(t) = \int_0^\infty h(t')u(t - t')dt' \tag{3}$$

worin u(t) das Eingangs- oder Anregungssignal, h(t) die Impulsantwortfunktion und y(t) das Ausgangs- oder Antwortsignal bedeutet. Im zeitdiskreten Fall wird dieser Ausdruck durch die nachstehende Summe approximiert

$$y(t) = \sum_{t'=0}^{\infty} h(t')u(t - t') \tag{4}$$

in der t und t' nur ganzzahlige Werte annehmen, indem ohne Beschränkung der Allgemeinheit der zeitliche Abstand zwischen benachbarten Messzeitpunkten (Abtastintervall) als 1 angesetzt ist. Die Approximation ist um so besser, je kleiner das Abtastintervall oder je höher die Abtastrate ist.

Bekanntlich enthält die Impulsantwortfunktion alle Frequenzen und beschreibt das gesamte dynamische Verhalten des der Anregung ausgesetzten Stoffs. Aus der Impulsantwortfunktion lassen sich die gewünschten Kenngrössen des Stoffs herleiten. So liefert die Fouriertransformation der Impulsantwortfunktion den Frequenzgang. Im Fall der Thermoanalyse kann die Impulsantwortfunktion z. B. das Wärmestromsignal nach einem Impuls in der Heizrate, also nach einem Temperatursprung, darstellen. Damit liefert in diesem Beispiel das Integral der Impulsantwortfunktion die Wärmekapazität, und ihre Fouriertransformation enthält die Änderung der Wärmekapazität mit der Frequenz. Es ist daher möglich, das mathematische Modell zu benützen, um weitgehend beliebige Anregungen einzuspeisen, ohne auch den Stoff anzuregen und dessen Antwort zu messen, und die Stoffeigenschaften aus der Antwort des Modells zu ermitteln. So liefert beispielsweise ein physisch nicht realisierbarer Diracstoss direkt die Impulsantwort und dessen Integral die Wärmekapazität.

Falls die oben erörterte Ausführungsform auf ein System angewendet werden soll, bei dem der Zusammenhang zwischen dem Anregungssignal und dem Antwortsignal einen nichtlinearen Anteil enthält, der nicht vernachlässigt werden kann oder soll, können in einer ersten Alternative alle mit der Nichtlinearität zusammenhängenden Anteile im Anregungssignal und/oder im Antwortsignal abgezogen und nur die solchermassen erhaltenen Differenzsignale der Auswertung mittels des linearen zeitinvarianten Modells unterzogen werden. Dies setzt allerdings voraus, dass die nichtlinearen Teile bekannt sind oder auf irgendeine Weise bestimmt werden können.

Dagegen ist in einer zweiten Alternative vorgegehen, dass das zeitinvarianten, lineare Modell erweitert wird, indem ein zur

Berücksichtigung eines nichtlinearen Anteils im Antwortsignal dienender mathematischer Ausdruck hinzugefügt wird. Die Bestimmungsgrössen dieses mathematischen Ausdrucks können zusammen mit der Impulsantwortfunktion aus der Zeitreihe von Werten des Anregungssignals und Messwerten des Antwortsignals bestimmt werden. Die Beschreibung des Zusammenhangs zwischen dem Anregungssignal und dem Antwortsignal eines solchen Systems, bei dem eine Nichtlinearität auftritt, nimmt die Form an

$$y_s(t) = X + y(t)$$

mit

$$y(t) = \int_0^\infty h(t - t')\, u(t')\, dt' \tag{5}$$

Diese zweite Alternative ist vor allem für die häufig vorkommenden Verhältnisse von Interesse, in denen der nichtlineare Anteil $X(t)$ des Antwortsignals $y_s(t)$ im Vergleich zu dessen linearem Anteil $y(t)$ nur langsam veränderlich ist. Dies ist beispielsweise bei der dynamischen Thermoanalyse der Fall. Dabei setzt sich der dem Antwortsignal entsprechende wärmefluss aus einem schnellen Änderungen des der Heizrate entsprechenden Anregungssignals folgenden, reversiblen wärmefluss, der mit der Wärmekapazität des Stoffs zusammenhängt, und einem nichtreversiblen wärmefluss zusammen, der durch thermische Ereignisse in dem Stoff (beispielsweise Phasenumwandlungen oder chemische Reaktionen) bestimmt ist. Weil thermische Ereignisse in der Regel eine gewisse Zeit benötigen, kann der damit verbundene Wärmefluss schnellen Änderungen des Anregungssignals nicht folgen und ist relativ langsam veränderlich.

Deshalb kann man in solchen Fällen die Dauer der für die Auswertung verwendeten Zeitreihen von Messwerten auf ein so kurzes Zeitfenster beschränken, dass sich in diesem Zeitfenster der nichtlineare Anteil $X(t)$ als eine Konstante manifestiert, also in dem jeweiligen Zeitfenster als

$$X = c \tag{6}$$

angesetzt werden kann. Bei einer signifikanten Änderung innerhalb des Zeitfensters kann statt dessen ein linearer Ansatz gewählt werden

$$X(t) = c_0 + c_1 \cdot (t - t_0) \tag{7}$$

Dabei bedeutet $t_0$ eine frei wählbare Konstante. Zweckmässigerweise wird man für $t_0$ den Zeitpunkt wählen,

der in der Mitte des jeweils verwendeten Zeitfensters liegt. Falls auch dieser lineare Ansatz im Rahmen der geforderten Genauigkeit nicht ausreicht, lassen sich in analoger Weise in den Ansatz für X(t) auch quadratische Terme oder solche noch höherer Ordnung oder andere Funktionen einschliessen. Auf diese Weise wird durch die Auswertung sowohl der lineare oder reversible Anteil als auch der nichtlineare oder nichtreversible Anteil des Antwortsignals getrennt bestimmt.

Der in den Gleichungen (3) bzw. (4) angegebene Ansatz für die Beschreibung des linearen zeitinvarianten Systems lässt sich direkt als Ansatz für das mathematische Modell verwenden und in bekannter Weise durch z-Transformation in die Form

$$y(z) = H(z)u(z) \qquad (8)$$

bringen, wobei y(z), H(z) und u(z) die z-Transformierten von y(t), h(t) und u(t) sind. Das mit u(t) beaufschlagte Modell liefert den Schätzwert $\hat{y}(t)$.

In diesem Zusammenhang zeichnet sich eine besonders vorteilhafte Ausführungsform des erfindungsgemässen Verfahrens dadurch aus, dass die z-transformierte Impulsantwortfunktion als rationale Funktion angesetzt wird. Dies bedeutet, dass H(z) die Form annimmt

$$H(z) = \frac{B(z)}{A(z)} \qquad (9)$$

wobei B(z) und A(z) Polynome vom Grad $n_b$ bzw. $n_a$ der Variablen z sind. Es hat sich gezeigt, dass dieser rationale Ansatz für H(z) viele praktische Fälle exakt oder in hinreichend guter Näherung beschreibt. Dies ist eine parametrische Beschreibung des Modells, wobei die Parameter durch die Koeffizienten des Nennerpolynoms A(z) und des Zählerpolynoms B(z) bestimmt sind. Damit nimmt Gleichung (8) die Form an

$$A(z)y(z) = B(z)u(z) \qquad (10)$$

Die in Gleichung (10) dargestellte Ausführungsform ist auch anwendbar auf den Fall, bei dem die Anregung aus mehr als einem Wert besteht, also mehr als eine Anregungsgrösse enthält, oder die Antwort aus mehr als einem Signal besteht, also mehr als eine Antwortgrösse enthält. A(z) ist dann eine Matrix, die für jedes Signal die Koeffizienten des zugehörigen Nennerpolynoms enthält. B(z) ist eine Matrix, die für jeden Wert der Anlegung die Koeffizienten des zugehörigen Zählerpolynoms enthält. Der Fachmann begegenet keinen besonderen Schwierigkeiten, wenn er die angegebenen Gleichungen auf Mehrgrössensysteme anwenden will. Hinweise dazu finden sich in Lehrbüchern, zum Beispiel im MatLab User Manual: System Identification Toolbox User's Guide; The MathWork, Inc. - November 2000, 4th printing for version 5.0 (Relase 12), pages 3-37 - 3-39. Das Prinzip des Verfahrens wird im Folgenden anhand des Beispiels mit einem Wert der Anregung und einem Signal der Antwort weiter erläutert, was aber nicht im einschränkenden Sinn verstanden werden darf. Das Verfahren umfasst auch Anregungen mit mehr als einer Anregungsgrösse und/oder Antworten mit mehr als einer Antwortgrösse.

Zur Bestimmung der Impulsantwortfunktion ist im Rahmen der Erfindung als zweckmässige Möglichkeit vorgesehen, dass die Ordnung $n_a$ des Nennerpolynoms und die Ordnung $n_b$ des Zählerpolynoms der z-transformierten Impulsantwortfunktion fest vorgegeben wird und die Koeffizienten dieser Polynome derart bestimmt werden, dass der durch das Modell beschriebene Zusammenhang zwischen dem Anregungssignal und dem Antwortsignal mit der Zeitreihe der Messwerte möglichst gut übereinstimmt.

Zweckmässig wird dabei so vorgegangen, dass der durch die z-transformierte Impulsantwortfunktion beschriebene Zusammenhang zwischen dem Anregungssignal und dem Antwortsignal im Zeitbereich dargestellt und in das dadurch erhaltene System linearer Gleichungen eine zu dessen Auflösung nach den Polynomkoeffizienten ausreichende Zeitreihe von Messwerten eingesetzt wird.

Bekanntlich erhält man die Darstellung im Zeitbereich durch Anwendung des Verschiebeoperators q, der bei Anwendung auf die z-transformierte Impulsantwortfunktion zum diskreten Zeitpunkt $t_k$ den Funktionswert zum vorangegangenen diskreten Abtastzeitpunkt $t_{k-1}$ liefert. Es gilt also

$$qh(t_k) = h(t_{k-1})$$
$$q^n h(t_k) = h(t_{k-n})$$
(11)

Die Anwendung des Verschiebeoperators q von Gleichung (11) überführt Gleichung (10) in den Zeitbereich mit dem Ergebnis

$$y_k = -a_1 \cdot y_{k-1} - a_2 \cdot y_{k-2} - \ldots - a_{na} \cdot y_{k-na}$$
$$+ b_1 \cdot u_{k-1} + b_2 \cdot u_{k-2} + \ldots + b_{k-nb} \cdot u_{k-nb} + \varepsilon_k \quad (12)$$

In Gleichung (12) bezeichnen die Indizes k, k-1, ... die diskreten Werte der Abtastzeitpunkte, $a_1$, $a_2$, ... , $a_{na}$ die Koeffizienten des Nennerpolynoms in Gleichung (9) und $b_1$, $b_2$, ..., $b_{nb}$ die Koeffizienten des Zählerpolynoms in Gleichung (9). Dabei ist in Gleichung (12) ohne Beschränkung der Allgemeinheit angenommen, dass $a_0 = 1$. Ferner wurde angenommen, dass der Koeffizient $b_0$ Null ist, weil dies in der Regel bei realen Systemen der Fall ist, da in der Praxis eine instantane Wirkung des Anregungssignals auf das Antwortsignal nicht vorkommt. Es wird jedoch darauf hingewiesen, dass ein von Null verschiedener Wert für $b_0$ in die obige Gleichung (12) eingeschlossen werden könnte, ohne dass sich dadurch die im folgenden beschriebene Behandlung ändert.

Schliesslich ist auf der rechten Seite von Gleichung (12) noch ein Fehlerglied $\varepsilon_k$ hinzugefügt worden, das die Abweichung berücksichtigt, die zwischen dem Modell und dem tatsächlich gemessenen Prozess auftritt.

Fasst man die in Gleichung (12) auftretenden Messwerte des Anregungssignals und des Antwortsignals als Messvektor $\varphi_k$ gemäss

$$\varphi_k = [-y_{k-1}, -y_{k-2}, \ldots - y_{k-na}, u_{k-1}, u_{k-2}, \ldots, u_{k-nb}] \quad (13)$$

zusammen und die gesuchten Parameterwerte als Parametervektor $\Theta$ gemäss

$$\Theta = [a_1, a_2, \ldots a_{na}, b_1, b_2, \ldots, b_{nb}]^T \quad (14)$$

so nimmt Gleichung (12) in Matrixschreibweise die Form an

$$y_k = \varphi_k \cdot \Theta + \varepsilon_k \quad (15)$$

Zur vollständigen Bestimmung des Parametervektors $\Theta$ sind somit $n_a + n_b$ Gleichungen erforderlich, was eine ausreichende Zeitreihe von Abtastzeitpunkten k, k-1, ... k-n erfordert.

Das Gleichungssystem wird derart aufgelöst, dass der Gleichungsfehler $\varepsilon_k$ minimiert wird. Dies kann beispielsweise durch die Methode der kleinsten Quadrate geschehen.

Bei der oben erläuterten Hinzufügung eines nichtlinearen Anteils tritt auf der rechten Seite von Gleichung (12) jeweils noch der Term hinzu, der durch die Anwendung des Operatorpolynoms A(q) auf die in Gleichung (6) bzw. (7) angegebenen Ausdrücke erhalten wird. Dies bedeutet, dass der Parametervektor $\Theta$ um entsprechende Parameter zu erweitern ist, welche bei der Lösung des Gleichungssystems ebenfalls berechnet werden. Analog ist der Vektor $\varphi_k$ zu erweitern.

Wenn man beispielsweise die Gleichung (7) verwendet, gilt:

$$\varphi_k = [1, t, -y_{k-1}, -y_{k-2}, \ldots - y_{k-na}, u_{k-1}, u_{k-2}, \ldots, u_{k-nb}]$$

und (16)

$$\Theta = [\gamma_1, \gamma_2, a_1, a_2, \ldots a_{na}, b_1, b_2, \ldots, b_{nb}]^T$$

wobei gilt:

$$\gamma_1 = c_0 \cdot \left(1 + a_1 + \dots + a_p\right) - c_1 \cdot \left(a_1 + 2a_2 + \dots + pa_p\right) \tag{17}$$

$$\gamma_2 = c_1 \cdot \left(1 + a_1 + \dots + a_p\right) \tag{18}$$

Es gilt dann wieder die Gleichung (15), wobei der Vektor $y_k$ aus den Werten $y_s(t)$ in Gleichung (5) aufgebaut ist.

Eine besonders wichtige Anwendung erfährt die Erfindung auf dem bekannten Gebiet der dynamischen Thermoanalyseverfahren. Bei diesen besteht das Anregungssignal häufig aus der Überlagerung einer konstanten Heizrate $\beta_u$ mit einem periodisch oder nichtperiodisch veränderlichen Anteil $u_t$, so dass für die gesamte Heizrate, d. h. die Zeitableitung der Temperatur, gilt

$$\frac{dT}{dt} = \beta_u + u_t(t) \tag{19}$$

Eine wichtige Klasse dieser Verfahren besteht darin, dass das Antwortsignal einem Wärmestrom eines dynamischen Thermoanalyseverfahrens entspricht.

Dieser Wärmestrom enthält für das vorstehend angegebene Anregungssignal einen reversiblen linearen Anteil $y(t)$, der dem veränderlichen Anteil $u(t)$ der Heizrate folgt, und einen nichtreversiblen Anteil, der etwa als zeitlich lineare Funktion beschrieben werden kann, wodurch sich insgesamt die Darstellung ergibt

$$\frac{dQ}{dt} = \alpha_0 + \alpha_1 t + y(t) \tag{20}$$

Das vorstehend erörterte Gleichungssystem nimmt für diesen Fall die Form an

$$y_k = \gamma_1 + \gamma_2 \cdot t_k - a_1 \cdot y_{k-1} - a_2 \cdot y_{k-2} \dots - a_{na} \cdot y_{k-na} + b_1 \cdot u_{k-1}$$
$$+ b_2 \cdot u_{k-2} \dots + b_{k-nb} \cdot u_{k-nb}$$

$$\Theta = \left[\gamma_1 \; \gamma_2 \; a_1 \; a_2 \; .. \; a_{na} \; b_1 \; b_2 \; .. \; b_{nb}\right]^T$$

$$\alpha_1 = \frac{\gamma_2}{1 + \sum_{i=1}^{na} a_i} \qquad \alpha_0 = \frac{\gamma_1 + \alpha_1 \cdot \left(\sum_{i=1}^{na} i \cdot a_i\right)}{1 + \sum_{i=1}^{na} a_i} \tag{21}$$

Hierin bestimmen die Parameter $a_1$, $a_2$, ..., $a_{na}$, $b_1$, $b_2$, ..., $b_{nb}$ den reversiblen Anteil und die Parameter $\gamma_1$, $\gamma_2$ den nichtreversiblen Anteil. Aus dem reversiblen Anteil des Wärmestroms lässt sich sodann in bekannter Weise die spezifische Wärmekapazität berechnen.

Wärmeströme können dadurch gemessen werden, dass eine Temperaturdifferenz erfasst wird, die längs des Wärmestrompfades auftritt. Dabei ist aber zu berücksichtigen, dass die Wärmeströme ausser dem durch den zu untersuchenden Stoff hervorgerufenen Wärmestromanteil weitere Anteile enthalten, die durch das für die Durchführung des Thermoanalyseverfahrens verwendete kalorimetrische System hervorgerufen sind. In diesem Fall liefert die Auswertung durch das erfindungsgemässe Verfahren den gesamten Wärmestrom einschliesslich seiner systembedingten Anteile. Die erfindungsgemässe Auswertung ist jedoch auch bei solchen Verfahren anwendbar, bei denen der Wärmestrom eine Differenz von Wärmeströmen zu einer Probe des Stoffs und einem bekannten Referenzstoff ist. Bei diesen Differenzverfahren ist der systembedingte Anteil kleiner.

Das erfindungsgemässe Verfahren ist auch mit Vorteil in dem Fall anwendbar, in dem die Probe einer inerten Referenzprobe entspricht oder in dem das System ohne Probe angeregt wird. In diesem Fall liefert das Verfahren die Geräteeigenschaften.

Weiter ist das erfindungsgemässe Verfahren mit Vorteil für den Fall anwendbar, dass das Antwortsignal einer Temperaturdifferenz eines bekannten dynamischen Thermoanalyse Analyseverfahrens (DTA) entspricht.

Das erfindungsgemässe Auswerteverfahren ist ferner mit Vorteil in dem Fall anwendbar, dass das Antwortsignal einer Heizleistungsdifferenz eines dynamischen Leistungskompensations-Thermoanalyseverfahrens entspricht. Bei dem Leistungskompensationsverfahren werden die Probe des zu untersuchenden Stoffs und ein bekannter Referenzstoff mit unterschiedlicher Heizleistung derart angeregt, dass die Temperaturdifferenz zwischen Probe und Referenz stets auf Null geregelt wird. In diesem Fall besteht die auszuwertende Antwort der Probe in ihrer im Vergleich zur Referenz unterschiedlichen Leistungsaufnahme.

Weiter ist das erfindungsgemässe Verfahren mit Vorteil für den Fall anwendbar, dass das Antwortsignal einer Längenänderung eines dynamischen thermomechanischen Analyseverfahrens entspricht. Unter der Einwirkung des dem Anregungssignal entsprechenden Temperaturprogramms kann in einer schrumpffähigen Probe gleichzeitig eine thermische Ausdehnung und eine sie überdeckende Schrumpfung auftreten. Mit Hilfe der erfindungsgemässen Auswertung lässt sich gleichzeitig das Ausdehnungsverhalten als reversibler Anteil und das Schrumpfverhalten als nichtreversibler Anteil bestimmen.

Allgemein ist noch darauf hinzuweisen, dass die Anregung von vornherein bekannt sein kann, so dass deren Werte nicht gemessen werden müssen. Dies ist jedoch keine notwendige Voraussetzung für die Erfindung. Vielmehr kann die Anregung unbekannt sein und ihre Werte durch Messung ermittelt werden. In diesem Fall ist eine zur Durchführung des Verfahrens geeignete Vorrichtung mit einer zur Messung der Werte der Anregung dienenden Messeinrichtung versehen. Jedenfalls aber ist es in einer bevorzugten Ausführungsform möglich, nach der Bestimmung der Parameter das mathematische Modell allein mit einer weitgehend beliebigen Anregung zu beaufschlagen.

In der folgenden Beschreibung wird die Erfindung unter Bezugnahme auf die Zeichnung näher erläutert. Es zeigt:

Fig. 1    eine schematische Darstellung eines Differenzkalorimeters zur Durchführung einer Ausführungsform des erfindungsgemässen Verfahrens,

Fig. 2    eine schematische Darstellung der bei dieser Ausführungsform des erfindungsgemässen Verfahrens stattfindenden Auswertung,

Fig. 3    ein Schema zur Veranschaulichung der Auswertung zur Bestimmung von Modellparametern, und

Fig. 4    ein Schema zur Veranschaulichung der Berechnung von Antwortwerten durch das Modell.

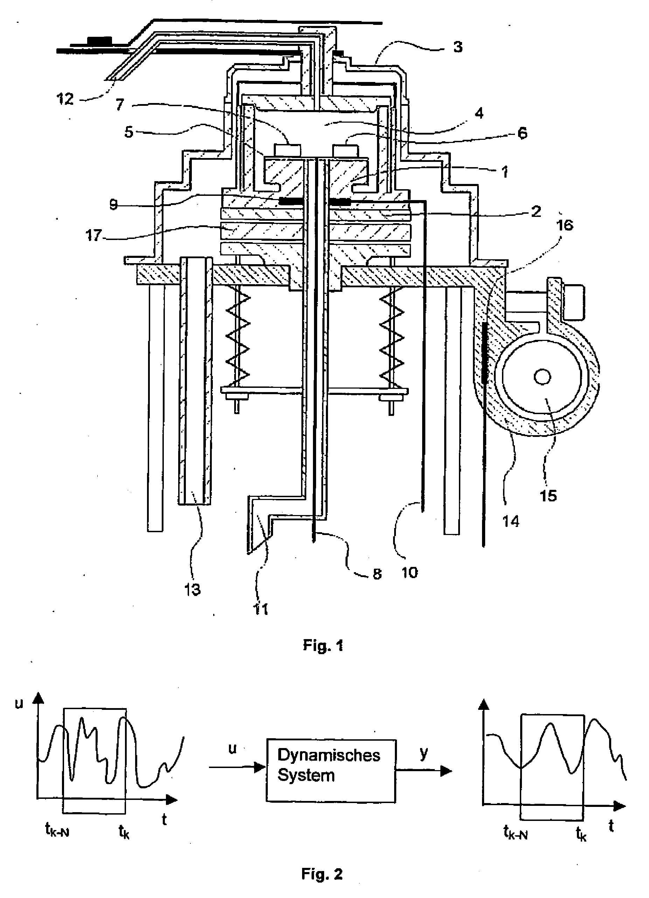

Gemäss dem in Fig. 1 dargestellten Vertikalschnitt weist ein Differenzkalorimeter einen hohlen zylindrischen Ofenblock 1 aus Silber auf, der von einer flachen Widerstandsheizung 2 beheizbar ist. Der Ofenblock 1 ist an seinem oberen Ende von einer Deckelanordnung 3 abgeschlossen, die abgenommen werden kann, um einen Zugang in das Innere 4 des Ofenblocks 1 zum Zwecke der Beschickung zu ermöglichen.

Im Inneren 4 des Ofenblocks 1 erstreckt sich ein scheibenförmiges Substrat 5, das mit dem Ofenblock 1 thermisch gekoppelt ist.

Auf der sich horizontal erstreckenden oberen Radialebene des scheibenförmigen Substrats 5 befindet sich eine Position zur Aufnahme eines Probentiegels 6 und eine dazu thermisch symmetrisch angeordnete Position zur Aufnahme eines Referenztiegels 7. Die Positionen des Probentiegels 6 und des Referenztiegels 7 sind mit je einer Thermoelementanordnung versehen. In dem dargestellten Ausführungsbeispiel sind zwei elektrisch entgegengesetzte Enden der beiden Thermoelementanordnungen auf dem Substrat 5 zusammengeschaltet, während die beiden anderen Enden auf zwei nur schematisch angedeuteten Signalleitungen 8 aus dem Ofenblock 1 herausgeführt sind. Dies hat zur Folge, dass auf den beiden Leitungen 8 ein dem Temperaturunterschied $\Delta T$ zwischen der Probenposition und der Referenzposition entsprechendes thermoelektrisches Signal auftritt. Dieses thermoelektrische Signal entspricht in bekannter Weise der Differenz der beiden Wärmeströme, die zwischen dem Ofenblock 1 und dem Probentiegel 6 einerseits sowie dem Ofenblock 1 und dem Referenztiegel 7 andererseits fliessen.

Die Widerstandsheizung 2 ist in nicht dargestellter Weise an eine gesteuerte Leistungsquelle angeschlossen, welche elektrische Heizenergie liefert. Die Steuerung erfolgt derart, dass ein vorgegebener dynamischer Temperaturverlauf als Funktion der Zeit durchlaufen wird. Dieser Temperaturverlauf wird mit einem in dem Ofenblock 1 angeordneten Platinthermometer 9 erfasst, dessen Ausgangssignal auf einer schematisch dargestellten Signalleitung 10 aus dem Ofenblock 1 herausgeführt ist. Die Signalleitungen 10 führen also ein Signal, das dem vorgegebenen Temperaturverlauf entspricht.

Die Bezugszeichen 11, 12 und 13 bezeichnen eine Spülgaszuführungsleitung, eine Spülgasabführungsleitung bzw. eine Trockengaszuführungsleitung. Ferner bezeichnen in bekannter Weise die Bezugszeichen 14, 15 und 16 einen Kühlflansch, einen Kühlfinger bzw. ein Platinthermometer. Zwischen der Kühlanordnung 14, 15 und der Widerstandsheizung 2 ist ein Wärmewiderstand 17 angeordnet.

Bei diesem Differenzkalorimeter dient der Temperaturverlauf, dem eine Probe in dem Probentiegel 6 innerhalb des Ofenblocks 1 ausgesetzt ist, als Anregung. Das den Temperaturverlauf darstellende Signal auf der Signalleitung 10 wird von einer Auswerteeinrichtung mit hinreichend grosser Abtastrate abgetastet und nach der Zeit differenziert, wodurch die Zeitableitung des Temperaturverlaufs, d. h. die Heizrate, erhalten wird. Synchron dazu wird auch das auf der Signalleitung 8 auftretende Temperaturdifferenzsignal $\Delta T$ abgetastet, das den Differenzwärmestrom als Antwort auf die Anregung darstellt.

Auf diese Weise erhält man eine Zeitreihe von Messpunkten des durch die Heizrate gegebenen Anxegungssignals $u(t_k)$, $u(t_{k-1})$, ... sowie des Antwortsignals $y(t_k)$, $y(t_{k-1})$, .... Dies ist schematisch in Fig. 2 dargestellt. In Fig. 2 bezeichnet die Reihe der zwischen $t_k$ und $t_{k-N}$ eingerahmten Messwerte ein Auswertefenster mit einer zur Lösung des vorstehend erörterten Gleichungssystems (15) bzw. (21) ausreichenden Anzahl von Messpunkten. Dies bedeutet, dass $N \geq (n_a + n_b)$ ist. Für jede Lage des Auswertefensters innerhalb des gesamten gemessenen Temperaturverlaufs werden somit die Parameterwerte des Modells neu bestimmt. Mit den solchermassen bestimmten Parametern lässt sich jede Antwort des Systems berechnen, insbesondere seine Impulsantwort.

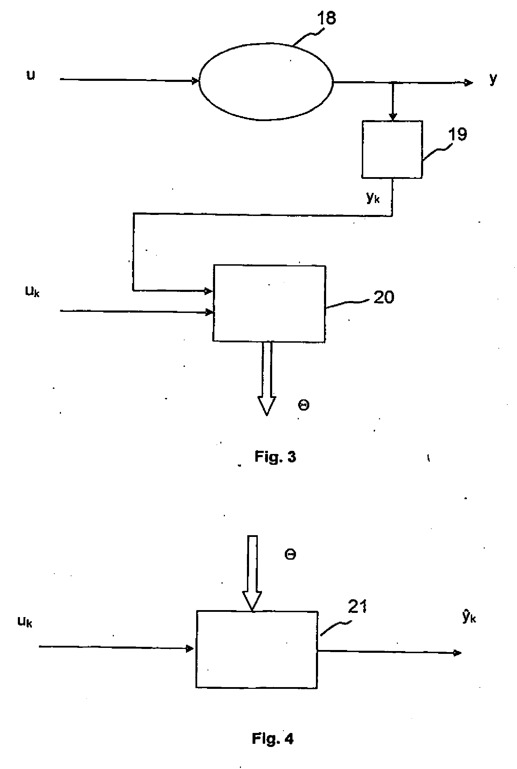

Dies ist in den Fig. 3 und 4 näher veranschaulicht. Dort ist mit u das Anregungssignal und mit y das Antwortsignal bezeichnet. $u_k$ bezeichnet den entweder von vornherein bekannten oder durch Messung ermittelten Wert des Anregungssignals $u(t_k)$ zum Abtastzeitpunkt $t_k$. Ebenso bezeichnet $y_k$ den Messwert des Antwortsignals $y(t_k)$ zum Abtastzeitpunkt $t_k$. $\Theta$ steht für den vorstehend in Gleichung (14) angegebenen Vektor der Parameterwerte.

Mit diesen Bezeichnungen veranschaulicht Fig. 3 die Einwirkung der Anregung u auf die Stoffprobe 18 und die von der Stoffprobe 18 darauf ansprechend abgegebene Antwort y. Eine Messeinrichtung 19 tastet die Antwort y ab und liefert die Abtastwerte $y_k$ an eine Auswerteeinrichtung 20, die unter anderem das mathematische Modell einschliesst. Der Auswerteeinrichtung 20 werden auch die in Fig. 3 als bekannt vorausgesetzten Werte $u_k$ der Anregung zugeführt. Mittels dieser Eingangswerte bestimmt die Auswerteeinrichtung 20 in der vorstehend anhand der Gleichungen (1) bis (21) dargelegten Weise den Vektor $\Theta$ der Parameterwerte.

Fig. 4 symbolisiert das Einsetzen des gemäss Fig. 3 erhaltenen Vektors $\Theta$ der Parameterwerte in das mathematische Modell 21. Letzteres modelliert damit den Zusammenhang zwischen der Anregung und der Antwort. Dadurch können, wie in Fig. 4 dargestellt, zu beliebigen Werten $u_k$ der Anregung entsprechende Schätzwerte $\hat{y}_k$ der Antwort ermittelt und daraus wiederum charakteristische Stoffeigenschaften berechnet werden, ohne gleichzeitig den Stoff anregen und dessen Antwort messen zu müssen.

In dem vorstehenden Beispiel stellt das Antwortsignal die Wärmestromdifferenz zwischen Probe und Referenz dar. Bei der thermomechanischen Analyse wird dagegen als Antwortsignal die Längenänderung einer dem Temperaturverlauf ausgesetzten Probe als Antwort erfasst.

Die vorstehend erläuterte Auswertung ist praktisch für alle Signalformen des dynamischen Anregungssignals u(t) geeignet. Insbesondere kann das Anregungssignal ein stochastisches Signal oder ein pseudostochastisches Signal sein, bei dem sich eine stochastische Signalfolge endlicher Dauer wiederholt.

Verzeichnis der Bezugszeichen

| | |
|---|---|
| 1 | Ofenblock |
| 2 | Widerstandsheizung |
| 3 | Deckelanordnung |
| 4 | Inneres |
| 5 | Substrat |
| 6 | Probentiegel |
| 7 | Referenztiegel |
| 8 | Signalleitung |
| 9 | Platinthermometer |
| 10 | Signalleitung |
| 11 | Spülgaszuführungsleitung |
| 12 | Spülgasabführungsleitung |
| 13 | Trockengaszuführungsleitung |
| 14 | Kühlflansch |
| 15 | Kühlfinger |

16 Platinthermometer
17 Wärmewiderstand
18 Stoffprobe
19 Messeinrichtung
20 Auswerteeinrichtung
21 mathematisches Modell

**Patentansprüche**

1. Verfahren zur thermoanalytischen Stoffuntersuchung, bei dem ein Stoff einer Anregung ausgesetzt wird, die eine beobachtbare Antwort hervorruft, welche mit Hilfe einer Zeitreihe von Werten der Anregung und Meßwerten der Antwort ausgewertet wird, wobei zur Bestimmung charakteristischer Stoffeigenschaften ein eine endliche Anzahl von Parametern enthaltendes Modell benützt wird, dessen Parameter aus der Zeitreihe von Werten der Anregung und von Meßwerten der Antwort sowie unter Zuhilfenahme des Modells selbst derart bestimmt werden, daß es den Zusammenhang zwischen der Anregung und der Antwort nachbildet, **dadurch gekennzeichnet, daß** für das Modell ein mathematischer Ansatz gewählt wird, bei dem aus dem Modell nach der Bestimmung seiner Parameter die Impulsantwortfunktion für den Stoff ermittelbar ist.

2. Verfahren nach Anspruch 1, **dadurch gekennzeichnet, dass** die Zeitreihe von Werten der mindestens einen Anregungsgrösse willkürlich vorgegeben wird.

3. Verfahren nach Anspruch 1 oder 2, **dadurch gekennzeichnet, dass** die Berechnung charakteristischer Stoffeigenschaften die Berechnung der Frequenzabhängigkeit von Stoffeigenschaften mit einschliesst.

4. Verfahren nach einem der Ansprüche 1 bis 3, **dadurch gekennzeichnet, dass** die Parameter für ein mindestens die Zeitreihe der Werte der mindestens einen Anregungsgrösse umfassendes Zeitintervall als zeitlich konstant angesetzt werden.

5. Verfahren nach einem der Ansprüche 1 bis 4, **dadurch gekennzeichnet, dass** für unterschiedliche Zeitintervalle die Parameter mittels innerhalb jedes Zeitintervalls gewählter Zeitreihen jeweils getrennt bestimmt werden.

6. Verfahren nach einem der Ansprüche 1 bis 5, **dadurch gekennzeichnet, dass** das Modell einen Anteil aufweist, der als zeitinvariant und linear angesetzt wird.

7. Verfahren nach Anspruch 6, **dadurch gekennzeichnet, dass** dem zeitinvarianten, linearen Anteil ein zur Berücksichtigung eines nichtlinearen Anteils in der Antwort dienender mathematischer Ausdruck hinzugefügt wird.

8. Verfahren nach Anspruch 6 oder 7, **dadurch gekennzeichnet, dass** der lineare Anteil im z-Bereich als rationale Funktion angesetzt wird.

9. Verfahren nach Anspruch 8, **dadurch gekennzeichnet, dass** die Ordnung $n_a$ des Nennerpolynoms und die Ordnung $n_b$ des Zählerpolynoms des linearen Anteils des Modells im z-Bereich vorgegeben wird und die Koeffizienten dieser Polynome derart bestimmt werden, dass der durch das Modell beschriebene Zusammenhang zwischen der Anregung und der Antwort mit der Zeitreihe der Messwerte möglichst gut übereinstimmt.

10. Verfahren nach Anspruch 9, **dadurch gekennzeichnet, dass** der durch den linearen Anteil des Modells im z-Bereich beschriebene Zusammenhang zwischen der Anregung und der Antwort im Zeitbereich dargestellt und in das dadurch erhaltene System linearer Gleichungen eine zu dessen Auflösung nach den Polynomkoeffizienten ausreichende Zeitreihe von Werten der mindestens einen Anregungsgrösse und Messwerten der mindestens einen Antwortgrösse eingesetzt wird.

11. Verfahren nach Anspruch 10, **dadurch gekennzeichnet, dass** ein bei der Auflösung auftretender Gleichungsfehler minimiert wird.

12. Verfahren nach einem der Ansprüche 1 bis 11, **dadurch gekennzeichnet, dass** die Anregung eine Anregungsgrösse enthält, die einer veränderlichen Temperatur entspricht.

13. Verfahren nach einem der Ansprüche 1 bis 11, **dadurch gekennzeichnet, dass** die Anregung eine Anregungsgrösse enthält, die einer veränderlichen Leistung entspricht.

14. Verfahren nach einem der Ansprüche 1 bis 11, **dadurch gekennzeichnet, dass** die Anregung eine Anregungsgrösse enthält, die einem veränderlichen Druck entspricht.

15. Verfahren nach einem der Ansprüche 1 bis 11, **dadurch gekennzeichnet, dass** die Anregung eine Anregungsgrösse enthält, die einer veränderlichen Strahlung entspricht.

16. Verfahren nach einem der Ansprüche 1 bis 11, **dadurch gekennzeichnet, dass** die Anregung eine Anregungsgrösse enthält, die einer veränderlichen Spannung oder Dehnung entspricht.

17. Verfahren nach einem der Ansprüche 1 bis 11, **dadurch gekennzeichnet, dass** die Anregung eine Anregungsgrösse enthält, die einer veränderlichen Gasatmosphäre entspricht.

18. Verfahren nach einem der Ansprüche 1 bis 11, **dadurch gekennzeichnet, dass** die Anregung eine Anregungsgrösse enthält, die einem veränderlichen Magnetfeld entspricht.

19. verfahren nach einem der Ansprüche 1 bis 11, **dadurch gekennzeichnet, dass** die Antwort eine Antwortgrösse enthält, die einer Temperaturdifferenz eines dynamischen Thermoanalyseverfahrens entspricht.

20. Verfahren nach einem der Ansprüche 1 bis 11, **dadurch gekennzeichnet, dass** die Antwort eine Antwortgrösse enthält, die einem Wärmestrom eines dynamischen Thermoanalyseverfahrens entspricht.

21. Verfahren nach Anspruch 20, **dadurch gekennzeichnet, dass** der Wärmestrom eine Differenz von Wärmeströmen zu einer Probe des Stoffs und einem bekannten Referenzstoff ist.

22. Verfahren nach einem der Ansprüche 1 bis 11, **dadurch gekennzeichnet, dass** die Antwort eine Antwortgrösse enthält, die einer Heizleistungsdifferenz eines dynamischen Leistungskompensations-Thermoanalyseverfahrens entspricht.

23. Verfahren nach einem der Ansprüche 1 bis 11, **dadurch gekennzeichnet, dass** die Antwort eine Antwortgrösse enthält, die einer Längenänderung eines dynamischen thermomechanischen Analyseverfahrens entspricht.

24. Verfahren nach einem der Ansprüche 1 bis 11, **dadurch gekennzeichnet, dass** die Antwort eine Antwortgrösse enthält, die einer Gewichtsänderung eines dynamischen thermogravimetrischen Analyseverfahrens entspricht.

25. Verfahren nach einem der Ansprüche 1 bis 11, **dadurch gekennzeichnet, dass** die Antwort eine Antwortgrösse enthält, die einer Kraft eines dynamischen mechanischen Analyseverfahrens entspricht.

26. Verfahren nach einem der Ansprüche 1 bis 11, **dadurch gekennzeichnet, dass** die Antwort eine Antwortgrösse enthält, die einer Längenänderung eines dynamischen mechanischen Analyseverfahrens entspricht.

27. Verfahren nach einem der Ansprüche 1 bis 11, **dadurch gekennzeichnet, dass** die Antwort eine Antwortgrösse enthält, die einer Spannungsänderung eines dynamischen dielektrischen Analyseverfahrens entspricht.

28. Verfahren nach einem der Ansprüche 1 bis 27, **dadurch gekennzeichnet, dass** die Anregung in einer zur Durchführung des Verfahrens bestimmten Vorrichtung in der Abwesenheit des zu untersuchenden Stoffs hervorgerufen und aus dem solchermassen bestimmten Modell die charakteristischen Grössen der Vorrichtung bestimmt werden.

29. Vorrichtung zur Durchführung des Verfahrens nach einem der Ansprüche 1 bis 28, mit einer Einrichtung, mittels derer eine Probe des Stoffs einer dynamischen Anregung aussetzbar ist, die eine beobachtbare Antwort hervorruft, einer Einrichtung zum Bestimmen von der Antwort entsprechenden Meßwerten, einer Einrichtung zum Auswerten der Antwort aus einer Zeitreihe von Werten der Anregung und von zugehörigen Meßwerten der Antwort, und einer Recheneinrichtung, in der ein den Zusammenhang zwischen der Anregung und der Antwort beschreibendes, eine endliche Anzahl von Parametern enthaltendes Modell festgelegt ist und in der diese Parameter aufgrund des Modells aus der Zeitreihe von Werten der Anregung und von Meßwerten der Antwort berechenbar sind, **dadurch gekennzeichnet, daß** dem Modell ein mathematischer Ansatz zugrunde liegt, bei dem aus dem Modell nach der Bestimmung seiner Parameter die Impulsantwortfunktion für den Stoff ermittelbar ist.

**30.** Vorrichtung nach Anspruch 29, **dadurch gekennzeichnet, daß** die Anregungseinrichtung eine einen Temperaturverlauf als Funktion der Zeit erzeugende Einrichtung und eine zur thermischen Ankopplung der Probe dienende Einrichtung aufweist, wobei die Meßeinrichtung zur Messung eines von der Probe beeinflußten Wärmestroms dient.

**31.** Vorrichtung nach Anspruch 30, **dadurch gekennzeichnet, daß** die Ankopplungseinrichtung eine zur symmetrischen thermischen Ankopplung eines Referenzmaterials dienende Einrichtung aufweist und die Meßeinrichtung zur Messung der Differenz zwischen dem Wärmestrom zur Probe und dem Wärmestrom zum Referenzmaterial dient.

**32.** Vorrichtung nach Anspruch 29, **dadurch gekennzeichnet, dass** die Anregungseinrichtung eine einen Temperaturverlauf als Funktion der Zeit erzeugende Einrichtung, eine zur thermischen Ankopplung der Probe und eines Referenzmaterials dienende Einrichtung und eine eine Temperaturdifferenz zwischen der Probe und dem Referenzmaterial auf Null regelnde Einrichtung aufweist, wobei die'Messeinrichtung zur Messung der für die Nullregelung der Temperaturdifferenz erforderlichen Differenz zwischen den der Probe und dem Referenzmaterial zugeführten Heizleistungen dient.

**33.** Vorrichtung nach Anspruch 29, **dadurch gekennzeichnet, dass** die Anregungseinrichtung eine einen Temperaturverlauf als Funktion der Zeit erzeugende Einrichtung und eine zur thermischen Ankopplung der Probe dienende Einrichtung aufweist, wobei die Messeinrichtung zur Messung einer Längenänderung der Probe dient.

**34.** Vorrichtung nach einem der Ansprüche 29 bis 33, **dadurch gekennzeichnet, dass** eine die Werte des Anregungssignals liefernde Einrichtung zum Messen eines der Anregung entsprechenden Anregungssignals vorgesehen ist.

**Claims**

**1.** Method for the thermal analysis of substances, in which a substance is exposed to an excitation which generates an observable response which is evaluated with the aid of a time series of values for the excitation and measurement values, wherein a model containing a finite number of parameters is used in order to determine characteristic properties of the substance the parameters of which are determined from the time series of values of the excitation and from measurement values of the response as well as using the model itself in a manner such as to simulate the relationship between the excitation and the response, **characterized in that** a mathematical approach is selected for the model by means of which the impulse response function for the substance can be determined from the model following determination of its parameters.

**2.** The method as claimed in claim 1, **characterized in that** the time series of values of the at least one excitation quantity is arbitrarily prescribed.

**3.** The method as claimed in claim 1 or 2, **characterized in that** the calculation of characteristic properties of the substance includes the calculation of the frequency dependency of the properties of the substance.

**4.** The method as claimed in one of claims 1 to 3, **characterized in that** the parameters for a time interval that encompasses at least the time series of the values of the at least one excitation quantity are assumed to be constant over time.

**5.** The method as claimed in one of claims 1 to 4, **characterized in that** for different time intervals, the parameters are determined separately by means of respective time series that are selected within each of the time intervals.

**6.** The method as claimed in one of claims 1 to 5, **characterized in that** the model comprises a portion which is assumed to be time-invariant and linear.

**7.** The method as claimed in claim 6, **characterized in that** the time-invariant linear portion is supplemented by a mathematical expression which serves to account for a non-linear portion of the response.

**8.** The method as claimed in claim 6 or 7, **characterized in that** the linear portion in the z-domain is assumed to be a rational function.

9. The method as claimed in claim 8, **characterized in that** the order $n_a$ of the denominator polynomial and the order $n_b$ of the numerator polynomial of the linear portion of the model are defined in the z-domain and the coefficients of said polynomials are determined in a manner such that the relationship between the excitation and the response as described by the model is in optimal conformity with the time series of the measurement values.

10. The method as claimed in claim 9, **characterized in that** the relationship between the excitation and the response described by the linear portion of the model in the z-domain is represented in the time-based domain, and in the system of linear equations which is obtained, a time series of a sufficient number of values of the at least one excitation quantity and measurement values of the at least one response quantity are inserted into said system of equations to solve them for the polynomial coefficients.

11. The method as claimed in claim 10, **characterized in that** an equation gap which occurs when solving the equations is minimized.

12. The method as claimed in one of claims 1 to 11, **characterized in that** the excitation comprises an excitation quantity which corresponds to a variable temperature.

13. The method as claimed in one of claims 1 to 11, **characterized in that** the excitation comprises an excitation quantity which corresponds to a variable power.

14. The method as claimed in one of claims 1 to 11, **characterized in that** the excitation comprises an excitation quantity which corresponds to a variable pressure.

15. The method as claimed in one of claims 1 to 11, **characterized in that** the excitation comprises an excitation quantity which corresponds to a variable amount of radiation.

16. The method as claimed in one of claims 1 to 11, **characterized in that** the excitation comprises an excitation quantity which corresponds to a variable stress or strain.

17. The method as claimed in one of claims 1 to 11, **characterized in that** the excitation comprises an excitation quantity which corresponds to a variable atmosphere of gas.

18. The method as claimed in one of claims 1 to 11, **characterized in that** the excitation comprises an excitation quantity which corresponds to a variable magnetic field.

19. The method as claimed in one of claims 1 to 11, **characterized in that** the response comprises a response quantity which corresponds to a temperature difference of a dynamic thermoanalytical method.

20. The method as claimed in one of claims 1 to 11, **characterized in that** the response comprises a response quantity which corresponds to a heat flow of a dynamic thermoanalytical method.

21. The method as claimed in claim 20, **characterized in that** the heat flow is constituted by a difference between heat flows to a sample of the substance and to a known reference substance.

22. The method as claimed in one of claims 1 to 11, **characterized in that** the response comprises a response quantity which corresponds to a difference in heating power of a dynamic power-compensating thermoanalytical method.

23. The method as claimed in one of claims 1 to 11, **characterized in that** the response comprises a response quantity which corresponds to a change in length of a dynamic thermo-mechanical analytical method.

24. The method as claimed in one of claims 1 to 11, **characterized in that** the response comprises a response quantity which corresponds to a change in weight of a dynamic thermo-gravimetric analytical method.

25. The method as claimed in one of claims 1 to 11, **characterized in that** the response comprises a response quantity which corresponds to a force of a dynamic mechanical analytical method.

26. The method as claimed in one of claims 1 to 11, **characterized in that** the response comprises a response quantity which corresponds to a change in length of a dynamic mechanical analytical method.

**27.** The method as claimed in one of claims 1 to 11, **characterized in that** the response comprises a response quantity which corresponds to a change in voltage of a dynamic dielectric analytical method.

**28.** The method as claimed in one of claims 1 to 27, **characterized in that** the excitation is generated in an apparatus which is designed for carrying out the method in the absence of the substance to be investigated and the characteristic quantities of the apparatus are determined from the model that is defined in this manner.

**29.** An apparatus for carrying out the method according to one of the claims 1 to 28, comprising a device by means of which a sample of the substance can be subjected to a dynamic excitation which generates an observable response, a device for determining measurement values corresponding to the response, a device for calculating the response from a time series of values for the excitation and from associated measurement values of the response, and a calculating device in which a mathematical model is specified which contains a finite number of parameters and describes the relationship between the excitation and the response and wherein said parameters can be calculated on the basis of the model from the time series of values for the excitation and from measurement values for the response, **characterized in that** the mathematical model is based on a mathematical approach by means of which the impulse response function for the substance can be determined from the model after determining its parameters.

**30.** The apparatus as claimed in claim 29, **characterized in that** the excitation device comprises a device which generates a temperature profile as a function of time and a device for thermal coupling of the sample, wherein the measuring device can measure a heat flow heat that is influenced by the sample.

**31.** The apparatus as claimed in claim 30, **characterized in that** the coupling device comprises a device for establishing symmetrical thermal coupling of a reference material, and the measuring device serves to measure the difference between the flow of heat to the sample and the flow of heat to the reference material.

**32.** The apparatus as claimed in claim 29, **characterized in that** the excitation device comprises a device which generates a temperature profile as a function of time, a device for establishing thermal coupling of the sample and a reference material, and a device which regulates a temperature difference between the sample and the reference material to zero wherein, in order to measure the temperature difference between that of the sample and that of the reference material which is required to regulate the difference to zero, the measuring device uses the heating power supplied thereto.

**33.** The apparatus as claimed in claim 29, **characterized in that** the excitation device comprises a device which generates a temperature profile as a function of time and a device for establishing thermal coupling of the sample, wherein the measuring device serves to measure a change in length of the sample.

**34.** The apparatus as claimed in one of claims 29 to 33, **characterized in that** a device delivering the values for the excitation signal is provided in order to measure an excitation signal corresponding to the excitation.

**Revendications**

**1.** Procédé thermoanalytique pour l'analyse de matières, dans lequel une matière est exposée à une excitation provoquant une réponse observable, laquelle est évaluée à l'aide d'une série chronologique de valeurs d'excitation et de valeurs de mesure de la réponse, dans lequel un modèle contenant un nombre fini de paramètres est utilisé pour déterminer des propriétés de matière caractéristiques, lesdits paramètres étant déterminés de telle façon, à partir de la série chronologique de valeurs d'excitation et de valeurs de mesure de la réponse et à l'aide du modèle lui-même, que celui-ci reproduit le rapport entre l'excitation et la réponse, **caractérisé en ce que** pour le modèle, une approche mathématique est sélectionnée dans laquelle la fonction de réponse impulsionnelle peut être déterminée pour la matière à partir du modèle après détermination de ses paramètres.

**2.** Procédé selon la revendication 1, **caractérisé en ce que** la série chronologique de valeurs de l'au moins une grandeur d'excitation est définie arbitrairement.

**3.** Procédé selon la revendication 1 ou 2, **caractérisé en ce que** le calcul de propriétés de matière caractéristiques inclut le calcul de l'effet de la fréquence sur les propriétés de matière.

**4.** Procédé selon l'une des revendications 1 à 3, **caractérisé en ce que** les paramètres pour un intervalle de temps incluant au moins la série chronologique des valeurs de l'au moins une grandeur d'excitation sont définis de manière à être constants dans le temps.

5. Procédé selon l'une des revendications 1 à 4, **caractérisé en ce que** pour différents intervalles de temps, les paramètres sont déterminés chacun séparément à l'aide de séries chronologiques sélectionnées dans chaque intervalle de temps.

6. Procédé selon l'une des revendications 1 à 5, **caractérisé en ce que** le modèle présente une part définie comme linéaire et invariante dans le temps.

7. Procédé selon la revendication 6, **caractérisé en ce qu'**une expression mathématique servant à intégrer une part non-linéaire dans la réponse est ajoutée à la part linéaire et invariante dans le temps.

8. Procédé selon la revendication 6 ou 7, **caractérisé en ce que** la part linéaire est définie comme une fonction rationnelle dans la plage z.

9. Procédé selon la revendication 8, **caractérisé en ce que** l'ordre $n_a$ du dénominateur et l'ordre $n_b$ du numérateur de la part linéaire du modèle sont définis dans la plage z, et les coefficients de ces polynômes sont déterminés de manière à ce que le rapport décrit par le modèle entre l'excitation et la réponse coïncide au mieux avec la série chronologique des valeurs de mesure.

10. Procédé selon la revendication 9, **caractérisé en ce que** le rapport décrit par la part linéaire du modèle dans la plage z entre l'excitation et la réponse est représenté dans la série chronologique, et **en ce qu'**une série chronologique de valeurs de l'au moins une grandeur d'excitation et de valeurs de mesure de l'au moins une grandeur de réponse est utilisée dans le système d'équations linéaires ainsi obtenu, celle-ci étant suffisante pour une résolution sur la base des coefficients de polynômes.

11. Procédé selon la revendication 10, **caractérisé en ce qu'**une erreur d'équation apparaissant lors de la résolution est minimisée.

12. Procédé selon l'une des revendications 1 à 11, **caractérisé en ce que** l'excitation contient une grandeur d'excitation correspondant à une température modifiable.

13. Procédé selon l'une des revendications 1 à 11, **caractérisé en ce que** l'excitation contient une grandeur d'excitation correspondant à une puissance modifiable.

14. Procédé selon l'une des revendications 1 à 11, **caractérisé en ce que** l'excitation contient une grandeur d'excitation correspondant à une pression modifiable.

15. Procédé selon l'une des revendications 1 à 11, **caractérisé en ce que** l'excitation contient une grandeur d'excitation correspondant à un rayonnement modifiable.

16. Procédé selon l'une des revendications 1 à 11, **caractérisé en ce que** l'excitation contient une grandeur d'excitation correspondant à une tension ou une extension modifiable.

17. Procédé selon l'une des revendications 1 à 11, **caractérisé en ce que** l'excitation contient une grandeur d'excitation correspondant à atmosphère gazeuse modifiable.

18. Procédé selon l'une des revendications 1 à 11, **caractérisé en ce que** l'excitation contient une grandeur d'excitation correspondant à un champ magnétique modifiable.

19. Procédé selon l'une des revendications 1 à 11, **caractérisé en ce que** la réponse contient une grandeur de réponse correspondant à une différence de température d'un procédé thermoanalytique dynamique.

20. Procédé selon l'une des revendications 1 à 11, **caractérisé en ce que** la réponse contient une grandeur de réponse correspondant à un flux thermique d'un procédé thermoanalytique dynamique.

21. Procédé selon la revendication 20, **caractérisé en ce que** le flux thermique est une différence de flux thermiques par rapport à un échantillon de matière et une matière de référence connue.

22. Procédé selon l'une des revendications 1 à 11, **caractérisé en ce que** la réponse contient une grandeur de réponse correspondant à une différence de puissance de chauffe d'un procédé thermoanalytique de compensation de puissance dynamique.

23. Procédé selon l'une des revendications 1 à 11, **caractérisé en ce que** la réponse contient une grandeur de réponse correspondant à une variation de longueur d'un procédé d'analyse thermomécanique dynamique.

24. Procédé selon l'une des revendications 1 à 11, **caractérisé en ce que** la réponse contient une grandeur de réponse correspondant à une variation de poids d'un procédé d'analyse thermogravimétrique dynamique.

25. Procédé selon l'une des revendications 1 à 11, **caractérisé en ce que** la réponse contient une grandeur de réponse correspondant à une force d'un procédé d'analyse mécanique dynamique.

26. Procédé selon l'une des revendications 1 à 11, **caractérisé en ce que** la réponse contient une grandeur de réponse correspondant à une variation de longueur d'un procédé d'analyse mécanique dynamique.

27. Procédé selon l'une des revendications 1 à 11, **caractérisé en ce que** la réponse contient une grandeur de réponse correspondant à une variation de tension d'un procédé d'analyse diélectrique dynamique.

28. Procédé selon l'une des revendications 1 à 27, **caractérisé en ce que** l'excitation est générée dans un dispositif conçu pour exécuter le procédé, en l'absence de la matière à examiner, et **en ce que** les grandeurs caractéristiques du dispositif sont déterminées à partir du modèle ainsi défini.

29. Système pour l'exécution du procédé selon l'une des revendications 1 à 28, comprenant un dispositif permettant d'exposer un échantillon de la matière à une excitation dynamique provoquant une réponse observable, un dispositif pour la détermination de valeurs de mesure correspondant à la réponse, un dispositif d'évaluation de la réponse à partir d'une série chronologique de valeurs de l'excitation et de valeurs de mesure correspondantes de la réponse, et une unité de calcul dans laquelle est défini un modèle contenant un nombre fini de paramètres et décrivant le rapport entre l'excitation et la réponse, et dans laquelle ces paramètres peuvent être calculés sur la base du modèle, à partir de la série chronologique de valeurs d'excitation et de valeurs de mesure de la réponse, **caractérisé en ce que** le modèle se base sur une approche mathématique dans laquelle la fonction de réponse impulsionnelle peut être déterminée pour la matière à partir du modèle après détermination de ses paramètres.

30. Dispositif selon la revendication 29, **caractérisé en ce que** le dispositif d'excitation comporte un système chargé de produire une courbe de température comme fonction du temps, ainsi qu'un système servant au couplage thermique de l'échantillon, le dispositif de mesure servant à mesurer un flux thermique influencé par l'échantillon.

31. Dispositif selon la revendication 30, **caractérisé en ce que** le dispositif d'accouplement comporte un système servant au couplage thermique symétrique d'un matériau de référence et le dispositif de mesure pour mesurer la différence entre le flux thermique vers l'échantillon et le flux thermique vers la matière de référence.

32. Dispositif selon la revendication 29, **caractérisé en ce que** le dispositif d'excitation comporte un système chargé de produire une courbe de température comme fonction du temps, un système servant au couplage thermique de l'échantillon et d'une matière de référence et un système réglant à zéro une différence de température entre l'échantillon et la matière de référence, le dispositif de mesure servant à mesurer la différence requise entre les puissances de chauffe alimentées vers l'échantillon et la matière de référence pour le réglage à zéro.

33. Dispositif selon la revendication 29 **caractérisé en ce que** le dispositif d'excitation comporte un système chargé de produire une courbe de température comme fonction du temps, ainsi qu'un système servant au couplage thermique de l'échantillon, le dispositif de mesure servant à mesurer une variation de longueur de l'échantillon.

34. Dispositif selon l'une quelconque des revendications 29 à 33, **caractérisé en ce qu'**il est prévu un système destiné à fournir les valeurs du signal d'excitation pour mesurer un signal d'excitation correspondant à l'excitation.

**Fig. 1**

**Fig. 2**

**Fig. 3**

**Fig. 4**

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4842417 A
- US 5453940 A
- JP 10123034 A
- EP 0559362 A1
- EP 1091208 A

**In der Beschreibung aufgeführte Nicht-Patentliteratur**

- System Identification Toolbox User's Guide. The MathWork, Inc, November 2000, 3-37, 3-39